Europäisches Patentamt

European Patent Office

Office européen des brevets

(11) Veröffentlichungsnummer: **0 280 280 B1**

(19)

## (12) EUROPÄISCHE PATENTSCHRIFT

(45) Veröffentlichungstag der Patentschrift: **29.04.92**

(51) Int. Cl.⁵: **G06K 13/08**

(21) Anmeldenummer: **88102754.4**

(22) Anmeldetag: **24.02.88**

(54) **Chipkartenleser.**

(30) Priorität: **27.02.87 DE 8703081 U**

(43) Veröffentlichungstag der Anmeldung:
**31.08.88 Patentblatt 88/35**

(45) Bekanntmachung des Hinweises auf die
Patenterteilung:
**29.04.92 Patentblatt 92/18**

(84) Benannte Vertragsstaaten:
**DE FR IT SE**

(56) Entgegenhaltungen:
**DE-A- 3 445 185**
**DE-A- 3 505 130**
**US-A- 4 048 476**
**US-A- 4 126 780**

(73) Patentinhaber: **SIEMENS AKTIENGESELL-
SCHAFT**
**Wittelsbacherplatz 2**
**W-8000 München 2(DE)**

(72) Erfinder: **Kleine, Peter, Dipl.-Ing.**
**Kramerstrasse 9**
**W-8121 Fischen(DE)**
Erfinder: **Wechsler, Klaus, Dipl.-Ing. (FH)**
**Johannisweg 5**
**W-8039 Puchheim(DE)**

Rank Xerox (UK) Business Services
(-/2.18/2.0)

## Beschreibung

Die vorliegende Erfindung beinhaltet einen Chipkartenleser mit einer durch zwei parallel zueinander angeordneten Begrenzungsflächen gebildeten und eine Griffstelle aufweisenden Einführungsöffnung zur Aufnahme einer Chipkarte.

Ein derartiger Chipkartenleser ist durch die DE-A-35 05 130 bekannt. Nach dem Einbringen der Chipkarte in das Gehäuse des Chipkartenlesers wird die Karte in der Lesestellung mittels einer Haltevorrichtung arretiert, wobei in dieser Stellung Kontakte einer Lese- und Auswerteeinrichtung an dem Chip zur Anlage gelangen. Nach Beendigung des Lesevorgangs wird z. B. die Karte durch Druck von seiten des Benutzers von der Haltevorrichtung freigegeben, wobei die Kontakte vom Chip abheben. Die Karte kann dann aus dem Chipkartenleser entnommen werden. Wird die Karte jedoch aus Unachtsamkeit von seiten des Benutzers in der Lesestellung aus dem Chipkartenleser entfernt, was bei der obengenannten Anordnung durch Eingriff in eine bogenförmig gestaltete Ausnehmung im Bereich der Einführungsöffnung für die Karte erfolgen kann, so können sowohl die Kontakte als auch der Chip aufgrund der schleifenden Bewegung beschädigt werden, was auf die Dauer zur Unbrauchbarkeit von Chip und Kontakten führen kann.

Der vorliegenden Erfindung liegt daher die Aufgabe zugrunde, einen Weg aufzuzeigen, durch den das Ziehen der Chipkarte im Lesezustand erschwert wird.

Diese Aufgabe wird dadurch gelöst, daß im Bereich der Griffstelle Verdickungen der Begrenzungsflächen vorgesehen sind, deren freie Endbereiche von den Begrenzungsflächen wegweisen und zu ihnen beabstandet verlaufen.

Durch Vorsehen von Verdickungen im Bereich der Griffstelle kann somit auf einfache Weise der direkte Zugriff zur Chipkarte verhindert werden, da durch diese Maßnahme der Abstand zur Chipkarte vergrößert wird.

Die Erfindung soll im folgenden anhand eines Ausführungsbeispiels näher erläutert werden.

Es zeigt

FIG 1 in einer perspektivischen Ansicht teilweise den die Chipkarte aufnehmenden Bereich des Gehäuses eines Chipkartenlesers,

FIG 2 eine geschnittene Seitenansicht der Anordnung nach FIG 1.

Der dargestellte Aufnahmebereich 1 eines Chipkartenlesers 3 weist eine schachtartige Öffnung 4 für die Chipkarte 2 auf. Diese den Abmessungen der Chipkarte in etwa entsprechende Öffnung 4 wird begrenzt durch die beiden Seitenwände 5 und 6 sowie die beiden senkrecht zu ihnen verlaufenden und sie auf Abstand haltenden Stege 7 und 8.

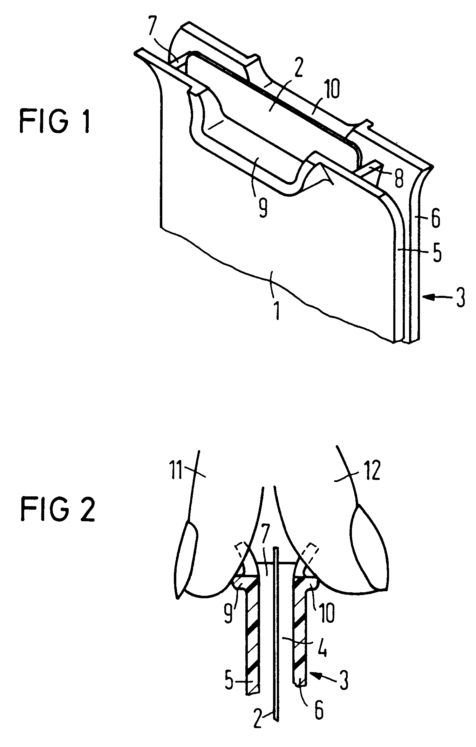

In den FIG ist die Chipkarte 2 im eingesteckten Zustand gezeigt. In dieser Lage liegen auf dem Chip der Karte Kontakte der Leseeinrichtung des Kartenlesers an. Wird die Karte in dieser Lage aus dem Kartenleser entfernt, so werden sowohl die Kontakte wie auch der Chip selbst beschädigt. Um das Ziehen der Chipkarte im Lesezustand zu erschweren, besitzt das Gehäuse des Chipkartenlesers 3 im Bereich der Griffstelle Verdickungen 9 und 10, deren freie Endbereiche von den Seitenwänden 5 und 6 beabstandet verlaufen. Dadurch wird, wie aus FIG 2 ersichtlich, der Zugriff zur Chipkarte 2 durch die Finger 11 und 12 der Bedienungsperson erschwert.

### Patentansprüche

1. Chipkartenleser (3) mit einer durch zwei parallel zueinander angeordneten Begrenzungsflächen (5, 6) gebildeten und eine Griffstelle aufweisenden Einführungsöffnung (4) zur Aufnahme einer Chipkarte (2), **dadurch gekennzeichnet,** daß im Bereich der Griffstelle Verdickungen (9, 10) der Begrenzungsflächen (5, 6) vorgesehen sind, deren freie Endbereiche von den Begrenzungsflächen (5, 6) wegweisen und zu ihnen beabstandet verlaufen.

### Claims

1. Chip card reader (3) having an insertion opening (4), which is formed by two delimiting surfaces (5, 6) arranged parallel to one another and which has a gripping point, for receiving a chip card (2), characterised in that there are provided in the region of the gripping point thickened parts (9, 10) of the delimiting surfaces (5, 6), the free end regions of which point away from the delimiting surfaces (5, 6) and extend at a distance therefrom.

### Revendications

1. Lecteur de cartes à puce (3) comportant une ouverture d'introduction (4), qui est formée par deux surfaces limites parallèles (5,6), possède une zone de préhension et sert à recevoir une carte à puce (2), caractérisé par le fait que dans la zone du point de préhension, il est prévu des parties épaissies (9,10) des surfaces limites (5,6), dont les zones d'extrémité libres s'écartent des surfaces limites (5,6) et s'étendent à distance de ces dernières.

FIG 1

FIG 2